# EUROPEAN PATENT SPECIFICATION

(11) **EP 3 144 511 B1**
(45) Date of publication and mention of the grant of the patent: **11.09.2019**
(21) Application number: 16181177.3
(22) Date of filing: 26.07.2016
(51) Int. Cl.: F02D 41/00, F02D 41/14, F02D 41/40, F02D 41/02

(54) **AIR-FUEL RATIO CONTROL METHOD AND EXHAUST GAS PURIFICATION DEVICE**
VERFAHREN ZUR REGELUNG DES LUFT-/KRAFTSTOFFVERHÄLTNISSES UND ABGASREINIGUNGSVORRICHTUNG
PROCÉDÉ DE COMMANDE DE RAPPORT AIR-CARBURANT ET DISPOSITIF DE PURIFICATION DE GAZ D'ÉCHAPPEMENT

(30) Priority: 02.09.2015 JP 2015173253
(43) Date of publication of application: 22.03.2017
(73) Proprietor: Bosch Corporation, Tokyo 150-8360 (JP)
(72) Inventor: TAKAHASHI, Kei, Higashimatsuyama-shi, Saitama 355-8603 (JP)
(74) Representative: Isarpatent

(56) References cited:
- EP-A2- 0 844 380
- JP-A- H11 229 850
- JP-A- 2011 047 332
- US-A- 5 715 796
- US-A1- 2013 073 181

## Description

### BACKGROUND OF THE INVENTION

### 1. Field of the Invention

The invention relates to air-fuel ratio control for an internal combustion engine and, in particular, to improved injection efficiency of and improvements in stability, reliability, and the like of post injection for regeneration of a catalyst that is provided in an exhaust gas purification device.

### 2. Description of the Related Art

As for an internal combustion engine, it is required to fulfill various regulations on exhaust gas to emit cleaner exhaust gas. Accordingly, as it has widely been known, an exhaust gas purification device that is constructed of various members for exhaust gas purification, such as a diesel particulate filter (DPF) and a nitrogen oxide (NOₓ) occlusion catalyst as representative examples, is provided in an internal combustion engine to remove particulate matters, nitrogen oxides, and the like that are contained in the exhaust gas (for example, see JP-A-2006-242009, specially pages 5 to 15 and Fig. 1 to Fig. 8).

By the way, in the case where combustion in the internal combustion engine continues in a lean combustion state, the nitrogen oxide occlusion catalyst that occludes nitrogen oxides reaches a saturated state, that is, an occlusion limit. Thus, the engine has to be brought into an over-rich combustion (rich combustion) state before the nitrogen oxide occlusion catalyst, which is used in the exhaust gas purification device, reaches the occlusion limit. In this way, oxygen concentration in the exhaust gas is lowered, and the engine is controlled in such a combustion state that oxygen molecules in nitrogen oxides occluded in the nitrogen oxide occlusion catalyst are bound to carbon monoxides (CO) and hydrocarbons (HC) and yield carbon dioxides (CO₂) and H₂O.

As a strategy for lowering the oxygen concentration in the exhaust gas and realizing rich combustion, a method for performing injection called post injection after main injection, and the like have been known, for example. The post injection makes less contribution to engine torque than the main injection.

In control of the combustion state by this post injection, the rich combustion state is typically secured by controlling an injection amount in the post injection (hereinafter referred to as a "post-injection amount" for convenience of the description) such that an air-fuel ratio detected by a lambda sensor indicates a specified value.

By the way, the lambda sensor, which is used to detect the air-fuel ratio, is relatively expensive. Thus, from perspectives of a device price and the like, one unit of the lambda sensor is used, and the post-injection amount for each cylinder is determined on the basis of output thereof.

EP 0 844 380 A2 discloses an exhaust emission control system and a method of internal combustion engine, wherein an exhaust gas temperature sensor on the upstream side of a NOₓ catalyst is used for detecting an information reflecting a post-injection amount to correct a command value of the post-injection amount based on a variation of the exhaust gas temperature corresponding to the amount of post-injection burned within each cylinder of an combustion engine.

### SUMMARY OF THE INVENTION

However, the air-fuel ratios usually differ among the cylinders. Thus, although the post-injection amount for each of the cylinders that is controlled on the basis of, so to speak, a representative value by one unit of the lambda sensor is subjected to feedback control such that the air-fuel ratio detected by the lambda sensor eventually obtains a desired value, an appropriate post-injection amount is not necessarily set for each of the cylinders. Accordingly, depending on a cylinder, such a problem arises that an excess post-injection amount is supplied, which results in, although being temporal, undesired combustion such as excess production of HC and discharge of soot.

The invention has been made in view of the above circumstance and provides an air-fuel ratio control method with the features of claim 1 and an exhaust gas purification device with the features of claim 2 that can set an injection amount in post injection required for regeneration of a nitrogen oxide occlusion catalyst to an appropriate value for each cylinder of an internal combustion engine without providing a lambda sensor for each of the cylinders and that realize higher injection efficiency and better stability than the related art.

According to the invention, an index value that corresponds to an estimated value of the air-fuel ratio of each of the cylinders is obtained on the basis of an exhaust temperature of each of the cylinder, and the post-injection amount by cylinder is set in correspondence with a difference from the target air-fuel ratio. Accordingly, differing from the related art, the post injection in the appropriate post injection amount can be performed for each of the cylinders without further adding a lambda sensor, and the post injection at favorable injection efficiency can be performed for each of the cylinders. Thus, such an effect is exerted that the exhaust gas purification device with more stability and higher reliability than the related art can be provided.

### BRIEF DESCRIPTION OF THE DRAWINGS

Fig. 1 is a configuration diagram that depicts a configuration example of a fuel injection controller of a common rail type used for an internal combustion engine that is provided with an exhaust gas purification device in an embodiment of the invention;
Fig. 2 is a configuration diagram that depicts a configuration example of an intake/exhaust device of the internal combustion engine that is provided with the exhaust gas purification device in the embodiment of the invention;
Fig. 3 is a schematic view that schematically depicts an attachment position of an exhaust temperature sensor in an example of the invention;
Fig. 4 is a subroutine flowchart that depicts an overall procedure of air-fuel ratio control processing executed by the exhaust gas purification device in the embodiment of the invention;
Fig. 5 is a subroutine flowchart that depicts a further specific procedure of processing for computing a characteristic deviation by cylinder executed in the air-fuel ratio control processing depicted in Fig. 4;
Fig. 6 is a subroutine flowchart that depicts a further specific procedure of processing for computing a post-injection deviation by cylinder executed in the air-fuel ratio control processing depicted in Fig. 4;
Fig. 7 is a functional block diagram in which functions required for an electronic control unit are depicted by functional blocks, the functions required to execute the air-fuel ratio control processing in the embodiment of the invention depicted in Fig. 4 by the electronic control unit;
Fig. 8 is a functional block diagram that depicts further specific functions of a characteristic deviation computation block depicted in Fig. 7; and
Fig. 9 is a functional block diagram that depicts further specific functions of a governor block for each cylinder depicted in Fig. 7.

### DETAILED DESCRIPTION OF THE INVENTION

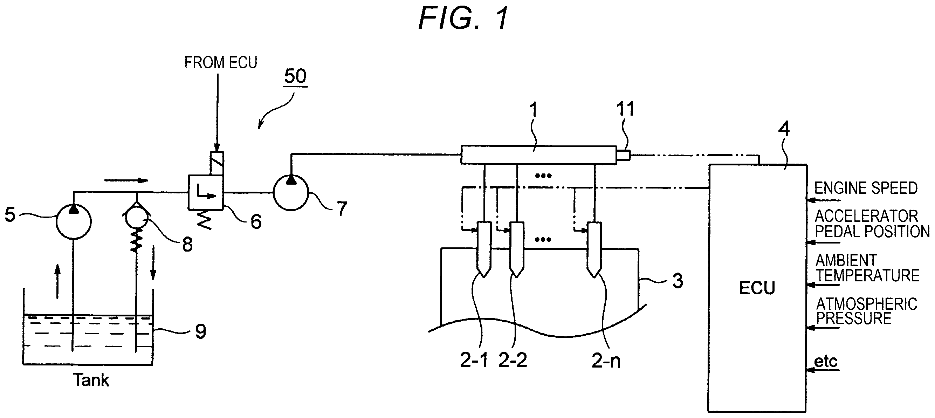

A description will hereinafter be made on an embodiment of the invention with reference to Fig. 1 to Fig. 9.

Noted that members, arrangement, and the like, which will be described below, do not limit the invention and various modifications can be made thereto.

First, a description will be made on a configuration example of a fuel injection controller of a common rail type used for an internal combustion engine that is provided with an exhaust gas purification device in the embodiment of the invention with reference to Fig. 1.

The fuel injection controller of the common rail type in the embodiment of the invention is configured by including, as main components: a high-pressure pump device 50 that pressure-feeds high pressure fuel; a common rail 1 that stores the high pressure fuel pressure-fed from this high-pressure pump device 50; plural fuel injection valves 2-1 to 2-n that inject and supply the high pressure fuel supplied from this common rail 1 to cylinders of a diesel engine (hereinafter referred to as an "engine") 3 as the internal combustion engine; and an electronic control unit (indicated as "ECU" in Fig. 1) 4 that executes fuel injection control processing, air-fuel ratio control processing for the internal combustion engine, which will be described below, and the like.

Such a configuration itself is the same as a basic configuration of a fuel injection controller of a common rail type of this type that has conventionally and widely been known.

The high-pressure pump device 50 has a known or well-known configuration provided with a supply pump 5, a metering valve 6, and a high-pressure pump 7 as main components.

In such a configuration, fuel in a fuel tank 9 is pumped up by the supply pump 5 and is supplied to the high-pressure pump 7 via the metering valve 6. An electromagnetic proportional control valve is used as the metering valve 6. By controlling an energization amount thereof by the electronic control unit 4, a flow rate of the supplied fuel to the high-pressure pump 7, in other words, a discharge amount of the high-pressure pump 7 is adjusted.

Noted that a return valve 8 is provided between an output side of the supply pump 5 and the fuel tank 9, so as to be able to return a surplus of the fuel on the output side of the supply pump 5 to the fuel tank 9.

In addition, the supply pump 5 may be provided as a separate component from the high-pressure pump device 50 on an upstream side of the high-pressure pump device 50, or may be provided in the fuel tank 9.

The fuel injection valves 2-1 to 2-n are respectively provided in the cylinders of the engine 3, are supplied with the high pressure fuel from the common rail 1, and inject the fuel through injection control by the electronic control unit 4.

The electronic control unit 4 is, for example, centered on a microcomputer (not depicted) that has a known or well-known configuration, has memory elements (not depicted) such as a RAM and a ROM, and is configured by including, as main components: a circuit (not depicted) for energizing and driving the fuel injection valves 2-1 to 2-n; and a circuit (not depicted) for energizing and driving the metering valve 6 and the like.

Such an electronic control unit 4 receives a detection signal of a pressure sensor 11 that detects pressure of the common rail 1, and also receives various detection signals, such as an engine speed, an accelerator pedal position, an ambient temperature, and atmospheric pressure, so as to use these signals for operation control and fuel injection control of the engine 3 and further for the air-fuel ratio control processing and the like in the embodiment of the invention.

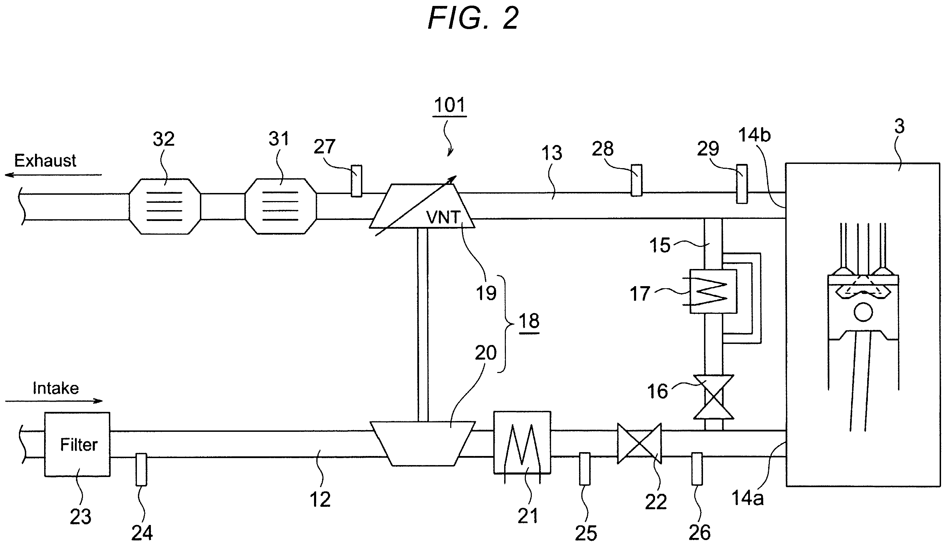

Fig. 2 depicts a configuration example of an exhaust gas purification device 101 in the embodiment of the invention, and a configuration thereof and the like will hereinafter be described with reference to the same drawing.

The exhaust gas purification device 101 in the embodiment of the invention is configured to be provided together with an exhaust gas recirculation device 102 that is provided for emission reduction of the engine 3 and the like.

First, an intake pipe 12 for taking air that is required to combust the fuel and an exhaust pipe 13 for discharging exhaust gas are respectively connected to an intake manifold 14a and an exhaust manifold 14b of the engine 3.

A communication passageway 15 for communicating between the exhaust pipe 13 and the intake pipe 12 is provided at appropriate positions of the exhaust pipe 13 and the intake pipe 12, and an EGR cooler 17 for cooling passing exhaust gas and an EGR valve 16 for adjusting a communication state of the communication passageway 15, in other words, a circulation amount of the exhaust gas are sequentially disposed from the exhaust pipe 13 side in the middle of this communication passageway 15.

In addition, a variable turbocharger 18 with a known or well-known configuration is provided to include, as main components: a variable turbine 19 that is provided on a downstream side of the communication passageway 15 in the exhaust pipe 13; and a compressor 20 that is provided on an upstream side of the communication passageway 15 in the intake pipe 12. The compressor 20 rotates by rotary power that is obtained from the variable turbine 19, and compressed air is delivered as intake air to the intake manifold 14a.

Furthermore, an intercooler 21 for cooling the intake air is provided at an appropriate position between the above-described communication passageway 15 and variable turbocharger 18 in the intake pipe 12.

An intake throttle valve 22 for adjusting an intake air amount is provided between this intercooler 21 and the communication passageway 15.

Moreover, a filter 23 for cleaning the intake air is provided on an upstream side in the intake pipe 12. On a downstream side thereof, an air mass sensor 24 for detecting the intake air amount that flows in via the filter 23 is provided.

In addition, in the intake pipe 12, an intake air temperature sensor 25 for detecting a temperature of the intake air of the engine 3 is provided between the intercooler 21 and the intake throttle valve 22, and an intake pressure sensor 26 for detecting intake pressure of the intake manifold 14a is provided on a downstream side of the intake throttle valve 22.

Meanwhile, a lambda sensor 27 is provided on a downstream side of the variable turbine 19 in the exhaust pipe 13.

In addition, on a downstream side of the lambda sensor 27, a nitrogen oxide occlusion catalyst 31 and a diesel particulate filter (DPF) 32 are sequentially provided toward the downstream side.

The nitrogen oxide occlusion catalyst 31 is also referred to as a NOₓ occlusion reduction type catalyst and has conventionally and widely been known. This nitrogen oxide occlusion catalyst 31 occludes NOₓ. However, the nitrogen oxide occlusion catalyst 31 reaches an occlusion limit when a lean combustion state continues. Thus, post injection is typically executed to bring a rich combustion state prior to reaching of the limit. In this way, oxygen molecules in NOₓ are bound to CO and HC to yield CO₂ and H₂O, and a NOₓ occlusion ability can thereby be regenerated.

The diesel particulate filter (DPF) 32 has a configuration that is similar to conventional one, and collects particulate matters in the exhaust gas.

In addition, an exhaust pressure sensor 28 for detecting exhaust pressure is provided at an appropriate position on an upstream side of the variable turbine 19 in the exhaust pipe 13.

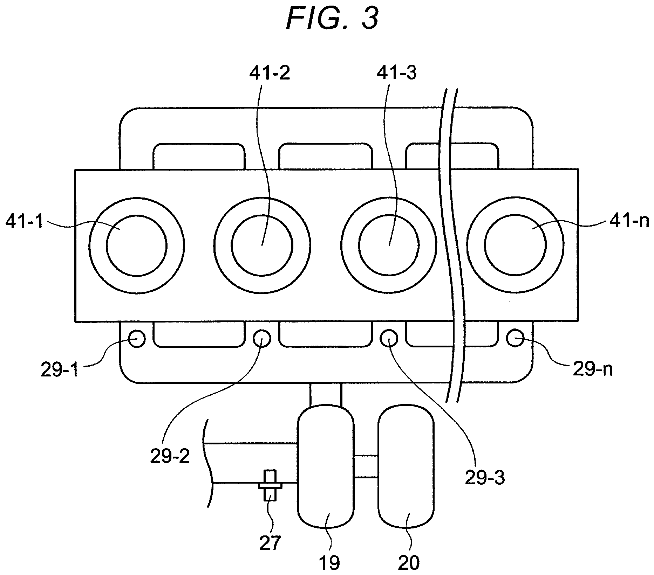

Furthermore, in the embodiment of the invention, exhaust temperature sensors 29-1 to 29-n for respectively detecting exhaust temperatures of cylinders 41-1 to 41-n are respectively provided at appropriate positions near exhaust ports of the cylinders 41-1 to 41-n (see Fig. 3).

Detection signals of these air mass sensor 24, intake air temperature sensor 25, intake pressure sensor 26, lambda sensor 27, exhaust pressure sensor 28, and exhaust temperature sensors 29-1 to 29-n are input to the electronic control unit 4 and are used for the fuel injection control processing, the air-fuel ratio control processing in an example of the invention, which will be described below, and the like.

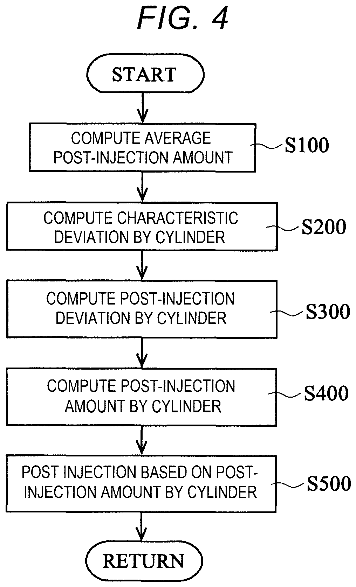

Next, a description will be made on the air-fuel ratio control processing in the embodiment of the invention that is executed by the electronic control unit 4 with reference to Fig. 4 to Fig. 9.

First, as a precondition, the exhaust gas purification device 101 in the embodiment of the invention is configured to be able to execute air-fuel ratio control that is required for the post injection to regenerate the nitrogen oxide occlusion catalyst 31 in a basically similar manner to the related art except for air-fuel ratio control according to the invention, which will be described below.

Noted that the "post injection" in the embodiment of the invention is injection that is performed exclusively for regeneration of the nitrogen oxide occlusion catalyst 31 at timing which is after main injection and at which contribution of the injection to generation of engine torque is extremely small, or the like.

Next, the air-fuel ratio control processing in the embodiment of the invention will be described in a recapitulative manner. In the air-fuel ratio control processing in the embodiment of the invention, when the post injection for regeneration of the nitrogen oxide occlusion catalyst 31 is performed, a numerical value that corresponds to an air-fuel ratio (lambda) of each of the cylinders in the engine 3 is calculated, a deviation thereof from an air-fuel ratio that is ultimately desired for the entire engine 3 is computed, and an injection amount in the post injection (hereinafter referred to as a "post-injection amount" for convenience of the description) of an appropriate cylinder that corresponds to the computed deviation of the air-fuel ratio is computed, so as to enable the post injection in the appropriate post-injection amount for each of the cylinders. In this way, when compared to the related art, the further appropriate air-fuel ratio control is realized.

Next, a description will be made on an overall procedure of the air-fuel ratio control processing in the embodiment of the invention with reference to Fig. 4.

Once the processing by the electronic control unit 4 is initiated, an average post-injection amount is first computed (see step S100 in Fig. 4).

Here, the "average post-injection amount" is similar to that computed in conventional air-fuel ratio control, and is an average value of the post-injection amounts for all of the cylinders 41-1 to 41-n.

That is, the air-fuel ratios usually differ among the cylinders 41-1 to 41-n, and thus, the appropriate post-injection amounts of the cylinders 41-1 to 41-n also differ. However, in the conventional air-fuel ratio control, the air-fuel ratio detected by one unit of the lambda sensor 27 is used as the air-fuel ratio of each of the cylinders 41-1 to 41-n, and the post-injection amount that is unambiguously determined on the basis of PID control is assumed and used as an average value of the post-injection amounts that usually differ among the cylinders 41-1 to 41-n. In the embodiment of the invention, the "average post-injection amount" is referred to have such a meaning.

Next, a characteristic deviation by cylinder is computed (see step S200 in Fig. 4).

The characteristic deviation by cylinder is an index that corresponds to a variation in the air-fuel ratio of each of the cylinders 41-1 to 41-n with respect to the air-fuel ratio detected by the lambda sensor 27, is computed by a procedure as will be described below in detail, and is unique to the air-fuel ratio control in the embodiment of the invention. This is used to indirectly comprehend the air-fuel ratio of each of the cylinders 41-1 to 41-n.

Next, a post-injection deviation by cylinder is computed (see step S300 in Fig. 4).

The post-injection deviation by cylinder is a deviation of the post-injection amount, which is typically desired for each of the cylinders 41-1 to 41-n and is computed on the basis of the above characteristic deviation by cylinder, from the above average post-injection amount, and is computed by a procedure as will be described below in detail. Noted that, similar to the above characteristic deviation by cylinder, this post-injection deviation by cylinder is also unique to the air-fuel ratio control in the embodiment of the invention.

Next, the post injection in each of the cylinders 41-1 to 41-n is performed in a post-injection amount by cylinder that is computed as described above (see step S500 in Fig. 4).

A series of these processing steps are repeatedly executed at specified intervals in a specified period in the case where it is determined as timing to execute regeneration processing of the nitrogen oxide occlusion catalyst 31 in a main routine, which is not depicted.

Conventionally, one post-injection amount is determined on the basis of the air-fuel ratio detected by the lambda sensor 27, and the post injection is performed in this one post-injection amount as the post-injection amount for each of the cylinders 41-1 to 41-n.

On the contrary, in the air-fuel ratio control in the embodiment of the invention, the post-injection amount for each of the individual cylinders 41-1 to 41-n is computed by using the characteristic deviation by cylinder, which corresponds to the air-fuel ratio of each of the individual cylinders 41-1 to 41-n, and the post injection is performed in the computed post-injection amount in each of the cylinders 41-1 to 41-n. Accordingly, differing from the related art, an excess or shortage of the post-injection amount does not occur to each of the cylinders 41-1 to 41-n, and the appropriate post injection is performed therein. Thus, occurrence of an undesired combustion state, in which excess production of HC, discharge of soot, and the like temporarily occur during the post injection, is reliably avoided.

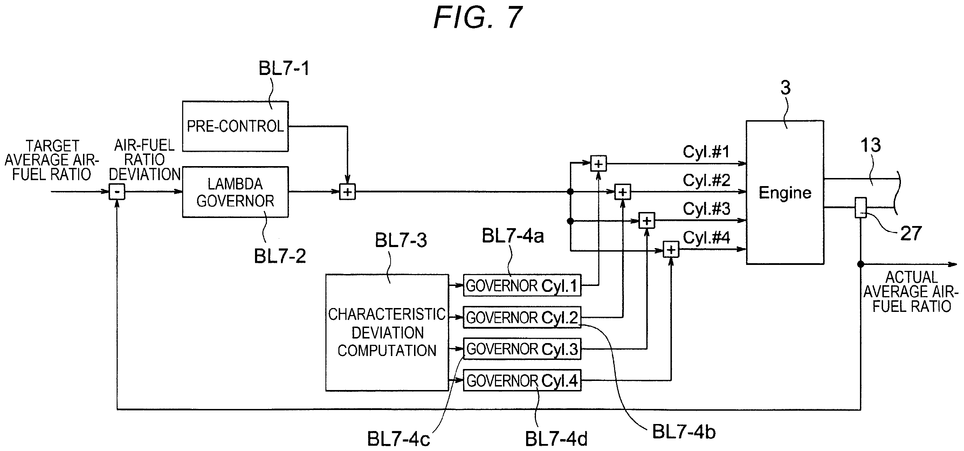

Fig. 7 depicts functional blocks for explaining functions required for the electronic control unit 4, the functions being required to execute the air-fuel ratio control in the embodiment of the invention, which has been described with reference to Fig. 4, by the electronic control unit 4. The functions thereof will hereinafter be described with reference to the same drawing. Noted that letters of "blocks" are omitted from the functional blocks in Fig. 7 from a perspective of simplifying and facilitating visibility of the drawing.

First, sections referred to as a pre-control block BL7-1 and a lambda governor block BL7-2 are sections that serve as main sections in the conventional air-fuel ratio control processing.

The pre-control block BL7-1 is configured that basic control values in the air-fuel ratio control are sequentially stored and updated by so-called learning processing and can be read out. Here, the basic control values are control values that are minimally required to execute the air-fuel ratio control and that are not influenced by various changes in the air-fuel ratio made by an operation state of the engine 3.

The lambda governor block BL7-2 is a section that, together with the pre-control block BL7-1, executes the air-fuel ratio control on the basis of proportional-integral-derivative (PID) control as will be described next.

That is, in the electronic control unit 4, an air-fuel ratio that should be set as a target at a current time point (hereinafter referred to as a "target average air-fuel ratio" for convenience of the description) is computed by the calculation processing that is similar to conventional processing on the basis of an operational status of the engine 3, the engine speed, the accelerator pedal position, the detection value of the lambda sensor 27, and the like.

The lambda governor block BL7-2 receives a difference between this target average air-fuel ratio and an air-fuel ratio at the current time point that is detected by the lambda sensor 27 (hereinafter referred to as an "actual average air-fuel ratio" for convenience of the description).

The lambda governor block BL7-2 outputs a control value (hereinafter referred to as a "PID control value" for convenience of the description) that should be added to the control value output from the above-described pre-control block BL7-1 in accordance with the difference between the target average air-fuel ratio and the actual average air-fuel ratio.

In the conventional air-fuel ratio control, the post injection in the engine 3 is performed by setting a sum of the PID control value obtained by this lambda governor block BL7-2 and the control value obtained by the pre-control block BL7-1 as the post-injection amount.

Noted that the post-injection amount, which is obtained as the sum of the PID control value and the control value obtained by the pre-control block BL7-1 as described above, will hereinafter be described as an "average post-injection amount" for convenience of the description.

In the embodiment of the invention, the post-injection amount for each of the cylinders 41-1 to 41-n is determined by further executing calculation processing, which will be described next, on the sum of the PID control value and the control value obtained by the pre-control block BL7-1.

That is, the characteristic deviation by cylinder is first computed in a characteristic deviation computation block BL7-3 (see step S200 in Fig. 4).

Meanwhile, an example in which provision of the four cylinders 41-1 to 41-n is assumed and cylinder governor blocks BL7-4a to BL7-4d are provided in correspondence with the four cylinders is depicted in Fig. 7. Based on the characteristic deviation by cylinder, a difference from the average post-injection amount is computed for each of the four cylinders. Then, the post-injection amount by cylinder that is the post-injection amount for each of the cylinders is computed by adding the computed difference to the above average post-injection amount, and the post injection in the post-injection amount by cylinder is performed by each of the cylinders. In this way, the actual average air-fuel ratio is realized.

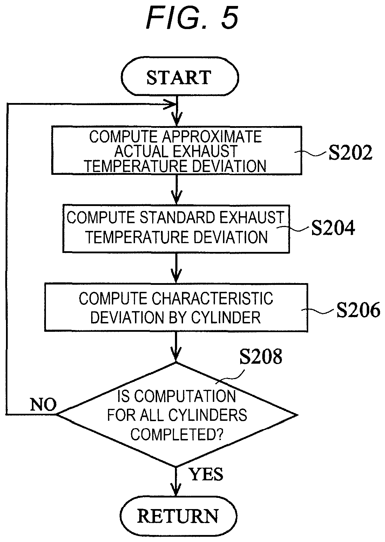

Next, a description will be made on a specific computation procedure of the characteristic deviation by cylinder (see step S200 in Fig. 4) with reference to a subroutine flowchart depicted in Fig. 5.

When the processing by the electronic control unit 4 is initiated, an approximate actual exhaust temperature deviation is first computed (see step S202 in Fig. 5).

Here, the approximate actual exhaust temperature deviation is a difference between each of exhaust temperatures of the individual cylinders 41-1 to 41-n that are respectively detected by the exhaust temperature sensors 29-1 to 29-n (hereinafter referred to as an "actual exhaust temperature" for convenience of the description) and an average exhaust temperature.

Noted that the average exhaust temperature is an average value of the exhaust temperatures that are detected by the exhaust temperature sensors 29-1 to 29-n.

Next, a standard exhaust temperature deviation is computed (see step S204 in Fig. 5).

Here, the standard exhaust temperature deviation is a difference between a standard exhaust temperature that is determined for each of the cylinders 41-1 to 41-n with respect to the engine speed and the injection amount in the main injection and an average value of the standard exhaust temperature of each of the cylinders 41-1 to 41-n.

In the embodiment of the invention, the above-described standard exhaust temperature is determined by using a so-called map (hereinafter a "standard exhaust temperature map") that is configured to be able to read out the exhaust temperatures with respect to various combinations of the engine speed and a main injection amount with a combination of the engine speed and the main injection amount being an input parameter. The exhaust temperatures are obtained in advance from a test result, a simulation, or the like for an engine that has the same specification as the engine 3 and has a standard operation characteristic. Noted that such a standard exhaust temperature map is provided for each of the cylinders 41-1 to 41-n.

Next, the characteristic deviation by cylinder is computed (see step S206 in Fig. 5).

That is, the characteristic deviation by cylinder is computed as the characteristic deviation by cylinder = the approximate actual exhaust temperature deviation - the standard exhaust temperature.

It is determined in step S208 whether the characteristic deviation by cylinder is computed for all of the cylinders 41-1 to 41-n. If it is determined that the characteristic deviation by cylinder is computed for all of the cylinders 41-1 to 41-n (if YES), the series of processing is terminated. On the other hand, if it is determined that the characteristic deviation by cylinder is not computed for all of the cylinders 41-1 to 41-n (if NO), the processing returns to above step S202, and the series of processing is repeated.

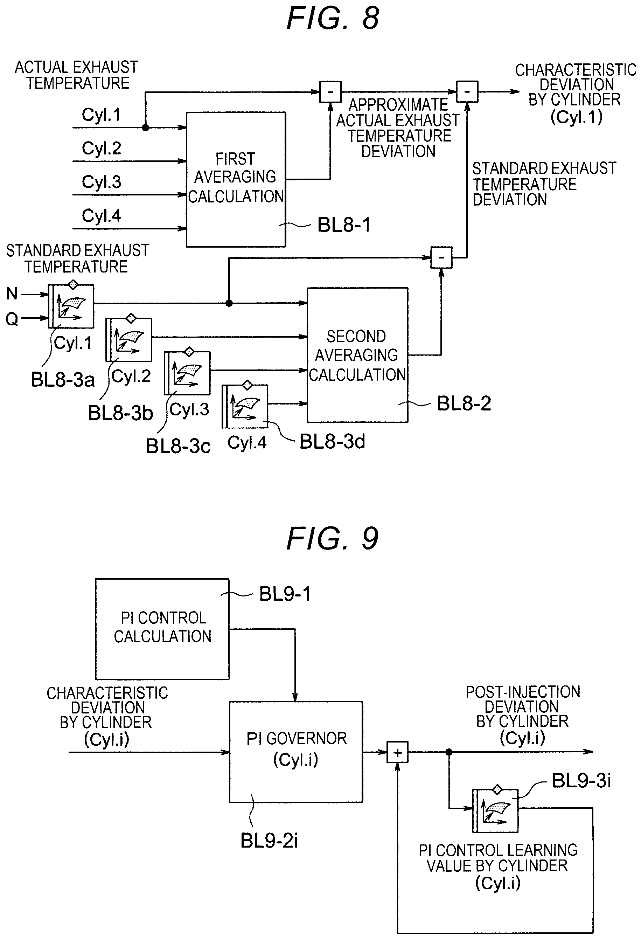

Fig. 8 depicts functional blocks for explaining functions required for the electronic control unit 4 in order to execute processing for computing the characteristic deviation by cylinder, which has been described with reference to Fig. 5, in the electronic control unit 4. The functions thereof will hereinafter be described with reference to the same drawing.

An example in which a case where four of the cylinders are provided is depicted in Fig. 8, and the functions that are required to compute the characteristic deviation by cylinder of a first cylinder (Cyl.1) among the cylinders (indicated as "Cyl.1", "Cyl.2", "Cyl.3", and "Cyl.4" in Fig. 8) are depicted by the functional blocks. Noted that basically the same applies to the other cylinders and the drawings therefor are not depicted.

In a first averaging calculation block BL8-1, an average value of the actual exhaust temperatures is computed on the basis of the actual exhaust temperatures of the cylinders 41-1 to 41-4. Meanwhile, in a second averaging calculation block BL8-2, an average value of the standard exhaust temperatures is computed on the basis of the standard exhaust temperatures of the cylinders 41-1 to 41-4.

Noted that a value of the standard exhaust temperature that corresponds to the engine speed and the main injection amount during computation of the average value is read out from each of standard exhaust temperature maps BL8-3a to BL8-3d respectively provided for the cylinders 41-1 to 41-4, and is input to the second averaging calculation block BL8-2.

Accordingly, the approximate actual exhaust temperature deviation that is a difference between the actual exhaust temperature of the first cylinder 41-1 and the average value of the actual exhaust temperatures that is computed in the first averaging calculation block BL8-1 is computed. Meanwhile, the standard exhaust temperature deviation that is a difference between the standard exhaust temperature of the first cylinder 41-1 and the average value of the standard exhaust temperatures that is computed in the second averaging calculation block BL8-2 is computed. Furthermore, a difference between the approximate actual exhaust temperature deviation and the standard exhaust temperature deviation is computed as the characteristic deviation by cylinder of the first cylinder 41-1.

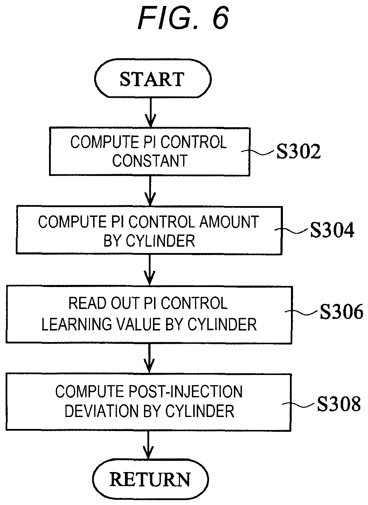

Next, a description will be made on a specific processing procedure of computing the post-injection deviation by cylinder (see step S300 in Fig. 4) with reference to the subroutine flowchart depicted in Fig. 6 and a functional block diagram depicted in Fig. 9 in which functions required to compute the post-injection deviation by cylinder in the electronic control unit 4 are depicted by functional blocks.

First, Fig. 9 is the functional block diagram in which the functions required to compute the post-injection deviation by cylinder in the electronic control unit 4 are depicted by the functional blocks. In particular, functions of the cylinder governor blocks BL7-4a to BL7-4d (see Fig. 7) are more specifically represented.

Noted that Fig. 9 depicts functions of one of the cylinder governor blocks BL7-4a to BL7-4d by the functional blocks and these functional blocks are required for each of the cylinder governor blocks BL7-4a to BL7-4d.

Here, each of the cylinder governor blocks BL7-4a to BL7-4d is configured by including a PI control calculation block BL9-1, a PI governor block BL9-2i, and a PI control learning map by cylinder BL9-3i as main components.

Noted that, while the PI control calculation block BL9-1 can be shared by the cylinder governor blocks BL7-4a to BL7-4d, the PI governor block BL9-2i and the PI control learning map by cylinder BL9-3i are provided for each of the cylinder governor blocks BL7-4a to BL7-4d.

In such a configuration, when the processing by the electronic control unit 4 is initiated, control constants in PI control are first computed (see step S302 in Fig. 6).

The control constants in this PI control are control constants of a term P and a term I that are required for the PI control in the PI governor block BL9-2i, which will be described below.

Next, a PI control amount by cylinder is computed (see step S304 in Fig. 6), a PI control learning value by cylinder is read out (see step S306 in Fig. 6), and the post-injection amount by cylinder is computed as a sum of the PI control amount by cylinder and the PI control learning value by cylinder (see step S308 in Fig. 6).

That is, the PI control learning map by cylinder BL9-3i configured that the PI control learning value by cylinder with respect to the combination of the engine speed and the main injection amount can be read out therefrom is provided in each of the cylinder governor blocks BL7-4a to BL7-4d in the embodiment of the invention. Every time the post-injection amount by cylinder is computed, the computed value is written as a learning value of the post-injection amount by cylinder in this PI control learning map by cylinder BL9-3i, and is thereby updated.

In the PI governor block BL9-2i, in order to compensate for a variation from the PI control learning value by cylinder, a control value that corresponds to the characteristic deviation by cylinder is computed and added to the PI control learning value by cylinder. In this way, the post-injection deviation by cylinder is computed.

### Industrial applicability

The invention can be applied to a vehicle for which improvements in stability and reliability of post injection that is required for regeneration of the nitrogen oxide occlusion catalyst are desired without further adding a lambda sensor.

## Claims

1. An air-fuel ratio control method for post injection in an exhaust gas purification device (101) that is configured to be able to execute the post injection for regeneration of a nitrogen oxide occlusion catalyst (31) that occludes nitrogen oxides discharged by an internal combustion engine (3), the air-fuel ratio control method comprising the steps of:
obtaining an average post-injection amount as a post injection amount that is unambiguously defined for each cylinder (41-1 to 41-n) of the internal combustion engine (3) on the basis of PID control in which an air-fuel ratio detected by a lambda sensor (27) and a target average air-fuel ratio as a target air-fuel ratio are input;
computing a post-injection deviation by cylinder (41-1 to 41-n) that corresponds to an excess/shortage amount in the post injection amount for each of the cylinders (41-1 to 41-n) with respect to the average post-injection amount on the basis of a characteristic deviation by cylinder (41-1 to 41-n) that corresponds to a variation in the air-fuel ratio of each of the cylinders (41-1 to 41-n); and
performing the post injection by setting an addition result obtained by adding the post-injection deviation by cylinder (41-1 to 41-n) to the average post-injection amount as a post-injection amount by cylinder (41-1 to 41-n) that corresponds to the post injection amount required in each of the cylinders (41-1 to 41-n) to realize the target average air-fuel ratio, and thereby enabling achievement of the target average air-fuel ratio;
wherein an approximate actual exhaust temperature deviation is computed that is a difference between an average value of exhaust temperatures of the cylinders (41-1 to 41-n) and the exhaust temperature of the cylinder (41-1 to 41-n) for which the characteristic deviation by cylinder (41-1 to 41-n) is computed, and
wherein the characteristic deviation by cylinder (41-1 to 41-n) is obtained based on the approximate actual exhaust temperature deviation;
**characterized in that**
a theoretical exhaust temperature is determined for each of the cylinders (41-1 to 41-n) as a standard exhaust temperature on the basis of an engine speed and a main injection amount as an injection amount in main injection in the internal combustion engine (3), a standard exhaust temperature deviation is computed that is a difference between an average value of standard exhaust temperatures and the standard exhaust temperature in the cylinder (41-1 to 41-n) for which the characteristic deviation by cylinder (41-1 to 41-n) is computed, and
the characteristic deviation by cylinder (41-1 to 41-n) is obtained as a difference between the approximate actual exhaust temperature deviation and the standard exhaust temperature deviation.

2. An exhaust gas purification device (101) provided with a nitrogen oxide occlusion catalyst (31) for occluding nitrogen oxides discharged by an internal combustion engine (3) in an exhaust pipe (13) of the internal combustion engine (3) and configured to be able to execute post injection for regeneration of the nitrogen oxide occlusion catalyst (31) by operation control of the internal combustion engine (3) by an electronic control unit (4) of the exhaust gas purification device (101), wherein
the electronic control unit (4):
computes an average post-injection amount as a post injection amount that is unambiguously defined for each cylinder (41-1 to 41-n) of the internal combustion engine (3) on the basis of PID control, based on an air-fuel ratio detected by a lambda sensor (27) and a target average air-fuel ratio as a target air-fuel ratio; computes a post-injection deviation by cylinder (41-1 to 41-n) that corresponds to an excess/shortage amount in the post injection amount for each of the cylinders (41-1 to 41-n) with respect to the average post-injection amount on the basis of a characteristic deviation by cylinder (41-1 to 41-n) that corresponds to a variation in the air-fuel ratio of each of the cylinders (41-1 to 41-n); and
is configured to be able to control post injection by setting an addition result of the average post-injection amount and the post-injection deviation by cylinder (41-1 to 41-n) as a post-injection amount by cylinder (41-1 to 41-n) that corresponds to the post injection amount required for each of the cylinders (41-1 to 41-n) to realize the target average air-fuel ratio, and thereby enables achievement of the target average air-fuel ratio by the post injection in the post-injection amount by cylinder(41-1 to 41-n); wherein the electronic control unit (4) computes an approximate actual exhaust temperature deviation that is a difference between an average value of exhaust temperatures of the cylinders (41-1 to 41-n) and the exhaust temperature of the cylinder (41-1 to 41-n) for which the characteristic deviation by cylinder (41-1 to 41-n) is computed;
and wherein the electronic control unit (4) computes the characteristic deviation by cylinder (41-1 to 41-n) based on the approximate actual exhaust temperature deviation;
**characterized in that**
the electronic control unit (4):
determines a theoretical exhaust temperature for each of the cylinders (41-1 to 41-n) as a standard exhaust temperature with respect to a combination of an engine speed and a main injection amount as an injection amount in main injection in the internal combustion engine (3) ;
computes a standard exhaust temperature deviation that is a difference between an average value of standard exhaust temperatures and the standard exhaust temperature in the cylinder (41-1 to 41-n) for which the characteristic deviation by cylinder (41-1 to 41-n) is computed; and
computes the characteristic deviation by cylinder (41-1 to 41-n) as a difference between the approximate actual exhaust temperature deviation and the standard exhaust temperature deviation.

## Patentansprüche

1. Verfahren zum Steuern des Luft/Kraftstoff-Verhältnisses für die Nacheinspritzung in eine Abgasreinigungsvorrichtung (101), die so konfiguriert ist, dass sie die Nacheinspritzung für die Regeneration eines Stickoxidabsorbtionskatalysators (31) ausführt, der Stickoxide, die von einer Brennkraftmaschine (3) ausgestoßen werden, absorbiert, wobei das Luft/Kraftstoff-Verhältnis-Steuerverfahren die folgenden Schritte umfasst:
Erhalten einer durchschnittlichen Nacheinspritzungsmenge als eine Nacheinspritzungsmenge, die für jeden Zylinder (41-1 bis 41-n) der Kraftmaschine (3) eindeutig definiert ist, auf der Grundlage einer PID-Steuerung, in die ein durch einen Lambdasensor (27) detektiertes Luft/KraftstoffVerhältnis und ein durchschnittliches Soll-Luft/Kraftstoff-Verhältnis als ein Soll-Luft/Kraftstoff-Verhältnis eingegeben werden;
Berechnen einer Nacheinspritzungsabweichung pro Zylinder (41-1 bis 41-n), die einer überschüssigen/fehlenden Menge in der Nacheinspritzungsmenge für jeden Zylinder (41-1 bis 41-n) in Bezug auf die durchschnittliche Nacheinspritzungsmenge entspricht, auf der Grundlage einer charakteristischen Abweichung pro Zylinder (41-1 bis 41-n), die einer Schwankung des Luft/Kraftstoff-Verhältnisses jedes der Zylinder (41-1 bis 41-n) entspricht; und
Ausführen der Nacheinspritzung durch Einstellen eines Additionsergebnisses, das durch Addieren der Nacheinspritzungsabweichung pro Zylinder (41-1 bis 41-n) zu der durchschnittlichen Nacheinspritzungsmenge als eine Nacheinspritzungsmenge pro Zylinder (41-1 bis 41-n), die der Nacheinspritzungsmenge entspricht, die in jedem der Zylinder (41-1 bis 41-n) erforderlich ist, um das durchschnittliche Soll-Luft/Kraftstoff-Verhältnis zu verwirklichen, erhalten wird, um dadurch die Erzielung des durchschnittlichen Soll-Luft/Kraftstoff-Verhältnisses zu ermöglichen;
wobei die ungefähre tatsächliche Abgastemperaturabweichung berechnet wird, die eine Differenz zwischen einem Durchschnittswert von Abgastemperaturen der Zylinder (41-1 bis 41-n) und der Abgastemperatur des Zylinders (41-1 bis 41-n), für den die charakteristische Abweichung pro Zylinder (41-1 bis 41-n) berechnet wird, ist, und
wobei die charakteristische Abweichung pro Zylinder (41-1 bis 41-n) auf der Grundlage der ungefähren tatsächlichen Abgastemperaturabweichung erhalten wird;
**dadurch gekennzeichnet, dass**
eine theoretische Abgastemperatur für jeden der Zylinder (41-1 bis 41-n) als eine Standard-Abgastemperatur auf der Grundlage einer Kraftmaschinendrehzahl und einer Haupteinspritzmenge als eine Einspritzmenge bei der Haupteinspritzung in der Brennkraftmaschine (3) bestimmt wird,
eine Abweichung der Standard-Abgastemperatur, die eine Differenz zwischen einem Durchschnittswert von Standard-Abgastemperaturen und der Standard-Abgastemperatur in dem Zylinder (41-1 bis 41-n), für den die charakteristische Abweichung pro Zylinder (41-1 bis 41-n) berechnet wird, ist, berechnet wird und
die charakteristische Abweichung pro Zylinder (41-1 bis 41-n) als eine Differenz zwischen der Abweichung der ungefähren tatsächlichen Abgastemperatur und der Abweichung der Standard-Abgastemperatur erhalten wird.

2. Abgasreinigungsvorrichtung (101), die mit einem Stickoxid-Absorptionskatalysator (31) zum Absorbieren von Stickoxiden, die von einer Brennkraftmaschine (3) in ein Abgasrohr (13) der Brennkraftmaschine (3) ausgestoßen werden, versehen ist und die konfiguriert ist, eine Nacheinspritzung für die Regeneration des Stickoxid-Absorptionskatalysators (31) mittels einer Betriebssteuerung der Brennkraftmaschine (3) durch eine elektronische Steuereinheit (4) der Abgasreinigungsvorrichtung (101) auszuführen, wobei
die elektronische Steuereinheit (4) konfiguriert ist zum:
Berechnen einer durchschnittlichen Nacheinspritzungsmenge als eine Nacheinspritzungsmenge, die für jeden Zylinder (41-1 bis 41-n) der Brennkraftmaschine (3) eindeutig definiert ist, auf der Grundlage einer PID-Steuerung, die auf einem durch einen Lambdasensor (27) detektierten Luft/KraftstoffVerhältnis und einem durchschnittlichen Soll-Luft/Kraftstoff-Verhältnis als einem Soll-Luft/Kraftstoff-Verhältnis beruht;
Berechnen einer Nacheinspritzungsabweichung pro Zylinder (41-1 bis 41-n), die einer überschüssigen/fehlenden Menge in der Nacheinspritzungsmenge für jeden der Zylinder (41-1 bis 41-n) in Bezug auf die durchschnittliche Nacheinspritzungsmenge entspricht, auf der Grundlage einer charakteristischen Abweichung pro Zylinder (41-1 bis 41-n), die einer Schwankung des Luft/Kraftstoff-Verhältnisses jedes der Zylinder (41-1 bis 41-n) entspricht; und
und konfiguriert ist, um eine Nacheinspritzung durch Einstellen eines Additionsergebnisses der durchschnittlichen Nacheinspritzungsmenge und der Nacheinspritzungsabweichung pro Zylinder (41-1 bis 41-n) als eine Nacheinspritzungsmenge pro Zylinder (41-1 bis 41-n), die der Nacheinspritzungsmenge entspricht, die für jeden der Zylinder (41-1 bis 41-n) erforderlich ist, um das durchschnittliche Soll-Luft/KraftstoffVerhältnis zu verwirklichen, steuern zu können und um dadurch das durchschnittliche Soll-Luft/KraftstoffVerhältnis durch die Nacheinspritzung mit der Nacheinspritzungsmenge pro Zylinder (41-1 bis 41-n) erzielen zu können;
wobei die elektronische Steuereinheit (4) eine Abweichung der ungefähren tatsächlichen Abgastemperatur, die eine Differenz zwischen einem Durchschnittswert der Abgastemperaturen der Zylinder (41-1 bis 41-n) und der Abgastemperatur des Zylinders (41-1 bis 41-n), für den die charakteristische Abweichung pro Zylinder (41-1 bis 41-n) berechnet wird, ist, berechnet;
und wobei die elektronische Steuereinheit (4) die charakteristische Abweichung pro Zylinder (41-1 bis 41-n) auf der Grundlage der Abweichung der ungefähren tatsächlichen Abgastemperatur berechnet;
**dadurch gekennzeichnet, dass**
die elektronische Steuereinheit (4):
eine theoretische Abgastemperatur für jeden der Zylinder (41-1 bis 41-n) als eine Standard-Abgastemperatur in Bezug auf eine Kombination aus einer Kraftmaschinendrehzahl und einer Haupteinspritzmenge als eine Einspritzmenge der Haupteinspritzung in der Brennkraftmaschine (3) bestimmt;
eine Abweichung der Standard-Abgastemperatur berechnet, die eine Differenz zwischen einem Durchschnittswert der Standard-Abgastemperaturen und der Standard-Abgastemperatur in dem Zylinder (41-1 bis 41-n), für den die charakteristische Abweichung pro Zylinder (41-1 bis 41-n) berechnet wird, ist; und
die charakteristische Abweichung pro Zylinder (41-1 bis 41-n) als eine Differenz zwischen der Abweichung der ungefähren tatsächlichen Abgastemperatur und der Abweichung der Standard-Abgastemperatur berechnet.

## Revendications

1. Procédé de commande du rapport air-carburant pour une post-injection dans un dispositif de purification de gaz d'échappement (101) qui est configuré pour pouvoir exécuter la post-injection pour la régénération d'un catalyseur d'occlusion d'oxyde d'azote (31) qui occulte les oxydes d'azote évacués par un moteur à combustion interne (3), le procédé de commande du rapport air-carburant comprenant les étapes de :
obtention d'une quantité moyenne post-injection comme quantité post-injection qui est définie sans ambiguïté pour chaque cylindre (41-1 à 41-n) du moteur à combustion interne (3) sur la base de la commande PID dans laquelle un rapport air-carburant détecté par un capteur lambda (27) et un rapport air-carburant moyen cible comme rapport air-carburant cible sont saisis ;
calcul d'un écart de post-injection par cylindre (41-1 à 41-n) qui correspond à une quantité d'excès/de déficit dans la quantité de post-injection pour chacun des cylindres (41-1 à 41-n) par rapport à la quantité moyenne de post-injection sur la base d'un écart caractéristique par cylindre (41-1 à 41-n) qui correspond à une variation du rapport air-carburant pour chacun des cylindres (41-1 à 41-n) ; et
exécution de la post-injection en réglant un résultat d'addition obtenu en ajoutant l'écart de post-injection par cylindre (41-1 à 41-n) à la quantité moyenne post-injection comme quantité post-injection par cylindre (41-1 à 41-n) qui correspond à la quantité post-injection requise dans chacun des cylindres (41-1 à 41-n) pour réaliser le rapport air-carburant moyen cible, et ainsi permettre d'atteindre le rapport air-carburant moyen cible ;
un écart approximatif réel de température d'échappement étant calculé, qui est une différence entre une valeur moyenne des températures d'échappement des cylindres (41-1 à 41-n) et la température d'échappement du cylindre (41-1 à 41-n) pour laquelle l'écart caractéristique par cylindre (41-1 à 41-n) est calculé, et
l'écart caractéristique par cylindre (41-1 à 41-n) étant obtenu sur la base de l'écart approximatif réel de température d'échappement ;
**caractérisé en ce que**
une température d'échappement théorique est déterminée pour chacun des cylindres (41-1 à 41-n) comme température d'échappement type sur la base d'un régime moteur et d'une quantité d'injection principale comme quantité d'injection dans l'injection principale dans le moteur à combustion interne (3),
un écart type de température d'échappement est calculé, qui est une différence entre une valeur moyenne des températures d'échappement types et la température d'échappement type dans le cylindre (41-1 à 41-n) pour laquelle l'écart caractéristique par cylindre (41-1 à 41-n) est calculé, et
l'écart caractéristique par cylindre (41-1 à 41-n) est obtenu comme une différence entre l'écart approximatif réel de température d'échappement et l'écart type de température d'échappement.

2. Dispositif de purification de gaz d'échappement (101) muni d'un catalyseur d'occlusion d'oxyde d'azote (31) pour occlure les oxydes d'azote déchargés par un moteur à combustion interne (3) dans un tuyau d'échappement (13) du moteur à combustion interne (3) et configuré pour pouvoir exécuter une post-injection pour la régénération du catalyseur d'occlusion d'oxyde d'azote (31) par une commande de fonctionnement du moteur à combustion interne (3) par un dispositif électronique (4) du dispositif de purification de gaz d'échappement (101),
l'unité de commande électronique (4) :
calculant une quantité moyenne post-injection comme quantité post-injection qui est définie sans ambiguïté pour chaque cylindre (41-1 à 41-n) du moteur à combustion interne (3) sur la base de la commande PID, sur la base d'un rapport air-carburant détecté par un capteur lambda (27) et d'un rapport air-carburant moyen cible comme rapport air-carburant cible ;
calculant un écart de post-injection par cylindre (41-1 à 41-n) qui correspond à une quantité d'excès/de déficit dans la quantité de post-injection pour chacun des cylindres (41-1 à 41-n) par rapport à la quantité moyenne post-injection sur la base d'un écart caractéristique par cylindre (41-1 à 41-n) qui correspond à une variation du rapport air-carburant de chacun des cylindres (41-1 à 41-n) ; et
étant configurée pour pouvoir commander la post-injection en réglant un résultat d'addition de la quantité moyenne post-injection et de l'écart post-injection par cylindre (41-1 à 41-n) comme quantité post-injection par cylindre (41-1 à 41-n) qui correspond à la quantité post-injection requise pour chacun des cylindres (41-1 à 41-n) pour réaliser le rapport air-carburant moyen cible, et permettre ainsi d'atteindre le rapport air-carburant moyen cible par la post-injection dans la quantité post-injection par cylindre (41-1 à 41-n) ;
l'unité de commande électronique (4) calculant un écart approximatif réel de température d'échappement qui est une différence entre une valeur moyenne des températures d'échappement des cylindres (41-1 à 41-n) et la température d'échappement du cylindre (41-1 à 41-n) pour laquelle l'écart caractéristique par cylindre (41-1 à 41-n) est calculé ; et
l'unité de commande électronique (4) calculant l'écart caractéristique par cylindre (41-1 à 41-n) sur la base de l'écart approximatif réel de température d'échappement ;
**caractérisé en ce que**
l'unité de commande électronique (4) :
détermine une température d'échappement théorique pour chacun des cylindres (41-1 à 41-n) comme température d'échappement type par rapport à une combinaison d'un régime moteur et d'une quantité d'injection principale comme quantité d'injection dans l'injection principale du moteur à combustion interne (3) ;
calcule un écart type de température d'échappement qui est une différence entre une valeur moyenne des températures d'échappement types et la température d'échappement type dans le cylindre (41-1 à 41-n) pour laquelle l'écart caractéristique par cylindre (41-1 à 41-n) est calculé ; et
calcule l'écart caractéristique par cylindre (41-1 à 41-n) comme différence entre l'écart approximatif réel de température d'échappement et l'écart type de la température d'échappement.
